# EUROPEAN PATENT APPLICATION

(11) **EP 4 737 014 A1**
(43) Date of publication of application: **06.05.2026**
(21) Application number: 25782851.7
(22) Date of filing: 28.03.2025
(51) Int. Cl.: B05C 5/02, B05C 11/10, H01M 4/04, H01M 10/42

(54) **COATING APPARATUS**

(30) Priority: 02.04.2024 KR 20240044440
(71) Applicant: LG Energy Solution, Ltd., Seoul 07335 (KR)
(72) Inventor: PARK, Sang Won, Daejeon 34122 (KR); KIM, Guk Tae, Daejeon 34122 (KR); PARK, Min Gu, Daejeon 34122 (KR); KIM, Sang Min, Daejeon 34122 (KR); MOON, Young Gyu, Daejeon 34122 (KR); KIM, Won Hwi, Daejeon 34122 (KR)
(74) Representative: Plasseraud IP
(86) International application number: PCT/KR2025/003988
(87) International publication number: WO 2025/211649

(57) **Abstract**

The technical idea of the present disclosure provides a coating apparatus including: a first coating die including a first groove, a manifold accommodating a first coating liquid, and a first outlet discharging the first coating liquid; a coating shim inserted into the first coating die and having a first flow path communicating with the manifold and a second groove communicating with the first groove; and a second coating die disposed in the first groove of the first coating die and the second groove of the coating shim and including a second outlet discharging a second coating liquid.

## Description

### [Technical Field]

The present disclosure relates to a coating apparatus.

This application claims the benefit of priority from Korean Patent Application No. 10-2024-0044440, filed on April 02, 2024, the entire contents disclosed therein are incorporated by reference into this disclosure.

### [Background]

With technological development and increasing demand for mobile devices, the demand for secondary batteries as an energy source is rapidly increasing, and such secondary batteries include an electrode assembly. The electrode assembly has a form in which a positive electrode, a separator, and a negative electrode are stacked at least once or more, and the positive electrode and the negative electrode are manufactured by applying a coating liquid to current collectors made of aluminum foil and copper foil, respectively. The coating liquid may include an electrode slurry (positive electrode active material slurry or negative electrode active material slurry) and/or an insulation liquid applied to both side portions of the electrode slurry layer to insulate the electrode slurry layer coated with the electrode slurry.

### [Summary]

### [Technical Problem]

The technical problem to be solved by the present disclosure is to provide a coating apparatus.

### [Technical Solution]

To solve the above-described problem, the technical idea of the present disclosure provides a coating apparatus including: a first coating die including a first groove, a manifold accommodating a first coating liquid, and a first outlet discharging the first coating liquid; a coating shim inserted into the first coating die and having a first flow path communicating with the manifold and a second groove communicating with the first groove; and a second coating die disposed in the first groove of the first coating die and the second groove of the coating shim and including a second outlet discharging a second coating liquid.

In exemplary embodiments, the first coating liquid is an electrode slurry, and the second coating liquid is an insulation liquid.

In exemplary embodiments, the second coating die is configured to move within the first groove of the first coating die.

In exemplary embodiments, the second coating die is configured to move in a first direction parallel to a discharge direction of the first coating liquid within the first groove of the first coating die.

In exemplary embodiments, by movement of the second coating die in the first direction, a distance along the first direction between a first die lip of the first coating die where the first outlet of the first coating die is provided and a second die lip of the second coating die where the second outlet of the second coating die is provided is variable.

In exemplary embodiments, the second coating die is configured to move in a second direction crossing a discharge direction of the first coating liquid within the first groove of the first coating die.

In exemplary embodiments, by movement of the second coating die in the second direction, a distance along the second direction between the first outlet of the first coating die and the second outlet of the second coating die is variable.

In exemplary embodiments, further comprising an actuator that moves the second coating die within the first groove of the first coating die.

In exemplary embodiments, the actuator is configured to move the second coating die in a first direction parallel to a discharge direction of the first coating liquid.

In exemplary embodiments, the actuator is configured to move the second coating die in a second direction crossing a discharge direction of the first coating liquid.

In exemplary embodiments, the coating shim separates the first flow path from the second groove.

In exemplary embodiments, further comprising a piping disposed outside the first coating die and delivering the second coating liquid to the second coating die.

To solve the above-described problem, the technical idea of the present disclosure provides a coating apparatus including: a first coating die including a first groove and a first outlet discharging a first coating liquid; a second coating die disposed within the first groove of the first coating die and including a second outlet discharging a second coating liquid; and an actuator that moves the second coating die within the first groove of the first coating die.

In exemplary embodiments, the actuator is configured to move the second coating die in a first direction parallel to a discharge direction of the first coating liquid and in a second direction crossing the discharge direction of the first coating liquid.

In exemplary embodiments, the first coating liquid is an electrode slurry, and the second coating liquid is an insulation liquid.

### [Advantageous Effects]

According to exemplary embodiments of the present disclosure, a second coating die configured to discharge an insulation liquid is mounted on a first coating die configured to discharge an electrode slurry, and since a coating shim for discharging the insulation liquid that requires precision machining is not needed, the manufacturing costs of the coating apparatus can be reduced.

According to exemplary embodiments of the present disclosure, since the second coating die configured to discharge the insulation liquid is movably mounted on the first coating die configured to discharge the electrode slurry, factors affecting dimensions of an insulation layer, such as a gap between an insulation liquid outlet and a coating roll and a distance between the insulation liquid outlet and an electrode slurry outlet, etc. can be adjusted. An operating speed of a pump and a position of the second coating die can be utilized as control factors for controlling the dimensions of the insulation layer, thereby enabling diversification of control methods for the coating process and reducing the loss of condition adjustment in the coating process.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view illustrating a coating apparatus according to exemplary embodiments of the present disclosure.
FIG. 2 is a perspective view illustrating a second coating die according to exemplary embodiments of the present disclosure.
FIG. 3 is a side view illustrating a portion of a coating apparatus according to exemplary embodiments of the present disclosure.
FIG. 4 is a cross-sectional view illustrating a coating apparatus according to exemplary embodiments of the present disclosure.
FIG. 5 is a cross-sectional view illustrating a portion of a coating apparatus according to exemplary embodiments of the present disclosure.
FIG. 6a and FIG. 6b are cross-sectional views illustrating an example of operation of a second coating die of a coating apparatus according to exemplary embodiments of the present disclosure.
FIG. 7 is a cross-sectional view illustrating an example of operation of a second coating die of a coating apparatus according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

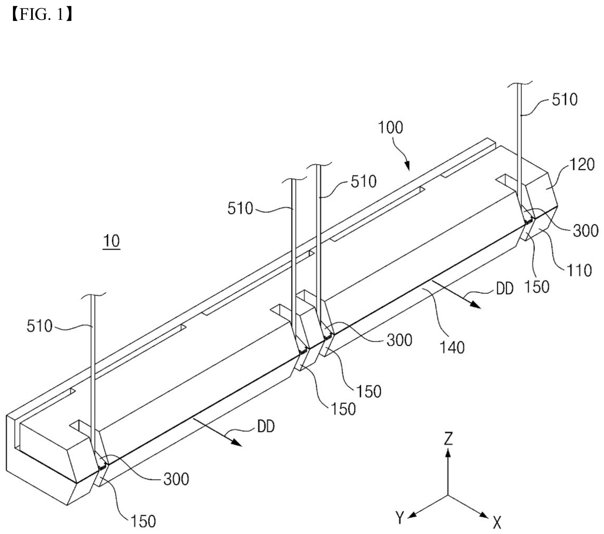

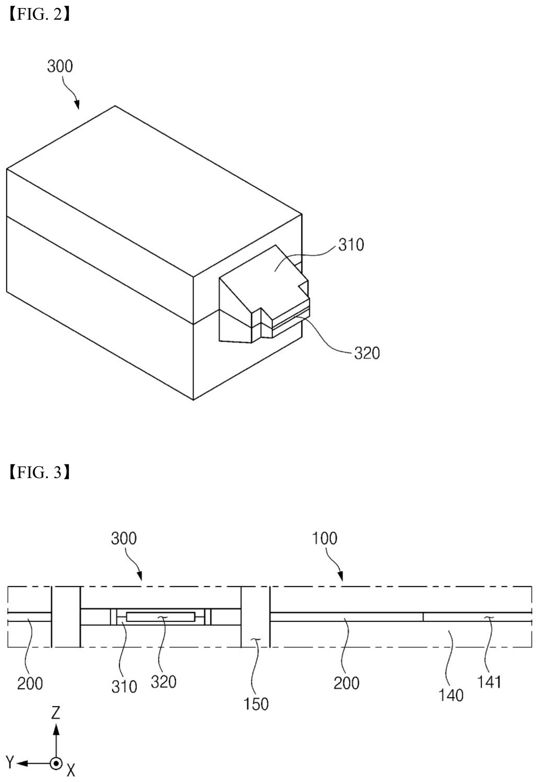

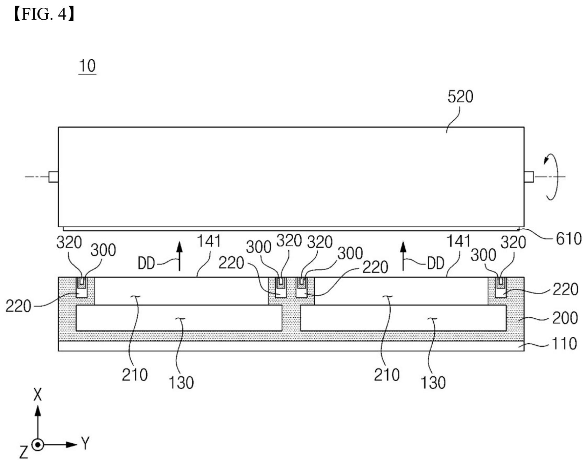

FIG. 1 is a perspective view illustrating a coating apparatus 10 according to exemplary embodiments of the present disclosure. FIG. 2 is a perspective view illustrating a second coating die 300 according to exemplary embodiments of the present disclosure. FIG. 3 is a side view illustrating a portion of a coating apparatus 10 according to exemplary embodiments of the present disclosure. FIG. 4 is a cross-sectional view illustrating a coating apparatus 10 according to exemplary embodiments of the present disclosure.

Referring to FIG. 1 to FIG. 4, the coating apparatus 10 can discharge a coating liquid toward a base substrate 610 moving by a coating roll 520 to apply the coating liquid on the base substrate 610. The base substrate 610 is a current collector, and the coating liquid may include an electrode slurry and/or an insulation liquid. The electrode slurry may include a positive electrode active material slurry and a negative electrode active material slurry. In exemplary embodiments, the coating apparatus 10 may be configured to simultaneously apply the electrode slurry and the insulation liquid on one surface of the base substrate 610. In exemplary embodiments, the coating apparatus 10 may be configured to apply only one of the electrode slurry and the insulation liquid on one surface of the base substrate 610. The insulation liquid may be applied on the base substrate 610 to cover both side portions of the electrode slurry coated on the base substrate 610. The electrode slurry may be referred to as a first coating liquid, and the insulation liquid may be referred to as a second coating liquid. The coating apparatus 10 can perform a coating process for manufacturing electrodes for secondary batteries by applying the first coating liquid and the second coating liquid on the base substrate 610.

The coating apparatus 10 may include a first coating die 100, a coating shim 200, and a second coating die 300.

The first coating die 100 may be configured to receive a first coating liquid from the outside and discharge the first coating liquid toward the base substrate 610. The first coating die 100 may include a first outlet 141 configured to discharge the first coating liquid. Hereinafter, a first direction (for example, X direction) is defined as a direction parallel to a discharge direction DD of the first coating liquid, a second direction (for example, Y direction) is defined as a direction crossing or perpendicular to the discharge direction DD of the first coating liquid, and a third direction (for example, Z direction) is defined as a direction perpendicular to the first direction (for example, X direction) and the second direction (for example, Y direction).

The first outlet 141 of the first coating die 100 may have a slit form extending in the second direction (for example, Y direction). The length of the first outlet 141 of the first coating die 100 in the second direction (for example, Y direction) may be greater than the length of the first outlet 141 of the first coating die 100 in the third direction (for example, Z direction). The first outlet 141 of the first coating die 100 may be provided on a first die lip 140 of the first coating die 100 facing the coating roll 520.

The first coating die 100 may include a first block 110 and a second block 120. The first block 110 may include a manifold 130 accommodating the first coating liquid. The second block 120 may be disposed on the first block 110 to cover the manifold 130 of the first block 110. In the first coating die 100, the first die lip 140 may include a portion of the first block 110 and a portion of the second block 120, and the first outlet 141 may be provided between an end of the first block 110 and an end of the second block 120.

The first coating die 100 may include a first groove 150 accommodating the second coating die 300. The first groove 150 of the first coating die 100 may be defined by an outer wall surface of the first coating die 100. The first groove 150 of the first coating die 100 may extend in the third direction (for example, Z direction). The first groove 150 of the first coating die 100 may include a groove of the first block 110 and a groove of the second block 120 aligned in the third direction (for example, Z direction). The first coating die 100 may include a plurality of first grooves 150 spaced apart from each other in the second direction (for example, Y direction), and the second coating die 300 may be inserted into each of the plurality of first grooves 150 of the first coating die 100.

The coating shim 200 may be disposed within the first coating die 100. The coating shim 200 may be inserted into a space provided between the first block 110 and the second block 120. The coating shim 200 may be fastened to at least one of the first block 110 and the second block 120 by a fastening member such as a bolt. The coating shim 200 may include a first flow path 210 communicating with the manifold 130 and extending from the manifold 130 to the first outlet 141 of the first coating die 100 in the first direction (for example, X direction). The first flow path 210 of the coating shim 200 can guide the first coating liquid from the manifold 130 to the first outlet 141 of the first coating die 100. A width of the first flow path 210 of the coating shim 200 in the second direction (for example, Y direction) can define a width of the first outlet 141 of the first coating die 100 in the second direction (for example, Y direction).

The coating shim 200 may include a second groove 220 accommodating the second coating die 300. The second groove 220 of the coating shim 200 may communicate with the first groove 150 of the first coating die 100. When viewed in a plane, the second groove 220 of the coating shim 200 may extend from an edge of the coating shim 200 facing the coating roll 520. The second groove 220 of the coating shim 200 may be between the groove of the first block 110 and the groove of the second block 120. The coating shim 200 can separate the first flow path 210 and the second groove 220 from each other so that the first coating liquid does not flow from the first flow path 210 of the coating shim 200 to the second groove 220 of the coating shim 200. The coating shim 200 may include a plurality of second grooves 220 spaced apart from each other in the second direction (for example, Y direction). The plurality of second grooves 220 of the coating shim 200 may respectively communicate with each of the plurality of first grooves 150 of the first coating die 100. The second coating die 300 may be accommodated in each of the plurality of second grooves 220 of the coating shim 200.

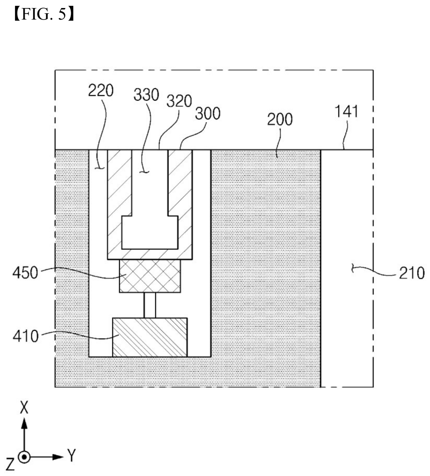

The second coating die 300 may be disposed in the first groove 150 of the first coating die 100 and the second groove 220 of the coating shim 200. The second coating die 300 may be configured to receive a second coating liquid from the outside and discharge the second coating liquid toward the base substrate 610. The second coating die 300 can discharge the second coating liquid in a direction substantially parallel to the discharge direction DD of the first coating liquid. The second coating die 300 may include a second outlet 320 configured to discharge the second coating liquid and a second flow path 330 (in FIG. 5) extending from the second outlet 320. The second outlet 320 of the second coating die 300 may have a slit form extending in the second direction (for example, Y direction). The length of the second outlet 320 of the second coating die 300 in the second direction (for example, Y direction) may be greater than the length of the second outlet 320 of the second coating die 300 in the third direction (for example, Z direction). The second outlet 320 of the second coating die 300 may be provided on a second die lip 310 of the second coating die 300 facing the coating roll 520.

The second coating die 300 may be connected to a liquid supply part that stores and supplies the second coating liquid through liquid delivery piping 510. The liquid delivery piping 510 is outside the first coating die 100, and a portion of the liquid delivery piping 510 may extend within the first groove 150 of the first coating die 100.

The coating apparatus 10 may include a plurality of second coating dies 300 mounted on the first coating die 100. The plurality of second coating dies 300 may be spaced apart from each other in the second direction (for example, Y direction). In exemplary embodiments, the second coating die 300 may be disposed on each of both sides of the first outlet 141 of the first coating die 100. In exemplary embodiments, the second coating die 300 may be disposed on each of both sides of the first flow path 210 of the coating shim 200. In exemplary embodiments, the first coating die 100 may include a plurality of first outlets 141, and the second coating die 300 may be disposed on each of both sides of each first outlet 141. In exemplary embodiments, the coating shim 200 may include a plurality of first flow paths 210, and the second coating die 300 may be disposed on each of both sides of each first flow path 210.

In exemplary embodiments, the second coating die 300 may be configured to move within the first groove 150 of the first coating die 100. In exemplary embodiments, the second coating die 300 may be configured to move in the first direction (for example, X direction), the second direction (for example, Y direction), and/or the third direction (for example, Z direction). For example, the first coating die 100 may have a guide structure for guiding movement of the second coating die 300. By movement of the second coating die 300, a relative position of the second coating die 300 with respect to the first coating die 100 can be adjusted. Movement of the second coating die 300 may be performed automatically or manually.

In exemplary embodiments, the second coating die 300 may be configured to move in the first direction (for example, X direction). By movement of the second coating die 300 in the first direction (for example, X direction), a relative position of the second coating die 300 with respect to the first coating die 100 in the first direction (for example, X direction) can be adjusted. In exemplary embodiments, the second coating die 300 may be configured to move in the second direction (for example, Y direction). By movement of the second coating die 300 in the second direction (for example, Y direction), a relative position of the second coating die 300 with respect to the first coating die 100 in the second direction (for example, Y direction) can be adjusted.

### (second embodiment)

FIG. 5 is a cross-sectional view illustrating a portion of a coating apparatus 10 according to exemplary embodiments of the present disclosure.

Referring to FIG. 5 together with FIG. 1 to FIG. 4, the coating apparatus 10 may include an actuator 410 configured to move the second coating die 300 within the first groove 150 of the first coating die 100. The actuator 410 may be mounted within the first groove 150 of the first coating die 100. The actuator 410 may be configured to move the second coating die 300 in the first direction (for example, X direction), the second direction (for example, Y direction), and/or the third direction (for example, Z direction). For example, the second coating die 300 may be mounted on a supporting block 450 provided within the first groove 150 of the first coating die 100, and the actuator 410 can adjust a position of the second coating die 300 by moving the supporting block 450. For example, the actuator 410 may include at least one motor. For example, the actuator 410 may include at least one screw motor.

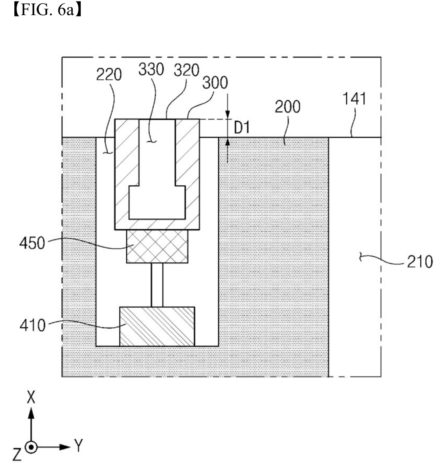

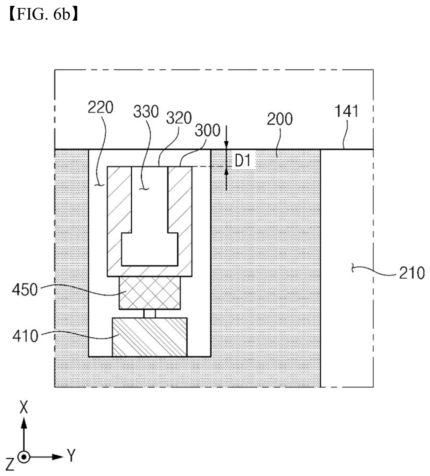

FIG. 6a and FIG. 6b are cross-sectional views illustrating an example of operation of the second coating die 300 of the coating apparatus 10 according to exemplary embodiments of the present disclosure.

Referring to FIG. 6a and FIG. 6b, the actuator 410 can move the second coating die 300 in the first direction (for example, X direction) to adjust a relative position of the second coating die 300 with respect to the first coating die 100. By movement of the second coating die 300 in the first direction (for example, X direction), a distance along the first direction (for example, X direction) between an end of the second die lip 310 of the second coating die 300 and an end of the first die lip 140 of the first coating die 100 and a distance along the first direction (for example, X direction) between the second outlet 320 of the second coating die 300 and the first outlet 141 of the first coating die 100 can be variable. The actuator 410 can move the second coating die 300 in the first direction (for example, X direction) to adjust a first offset distance D1 in the first direction (for example, X direction) between the second outlet 320 of the second coating die 300 and the first outlet 141 of the first coating die 100.

As shown in FIG. 6a, the actuator 410 can adjust the position of the second coating die 300 so that the second die lip 310 of the second coating die 300 protrudes from the first die lip 140 of the first coating die 100 in the discharge direction DD of the first coating liquid. In this case, the distance between the second outlet 320 of the second coating die 300 and the coating roll 520 may be set smaller than the distance between the first outlet 141 of the first coating die 100 and the coating roll 520.

As shown in FIG. 6b, the actuator 410 can adjust a position of the second coating die 300 so that the first die lip 140 of the first coating die 100 protrudes from the second die lip 310 of the second coating die 300 in the discharge direction DD of the first coating liquid. In this case, the distance between the second outlet 320 of the second coating die 300 and the coating roll 520 may be set greater than the distance between the first outlet 141 of the first coating die 100 and the coating roll 520.

According to exemplary embodiments, the distance between the second outlet 320 of the second coating die 300 and the coating roll 520, which is a factor for controlling thickness and/or width of an insulation layer applied on the base substrate 610, can be adjusted by moving the second coating die 300.

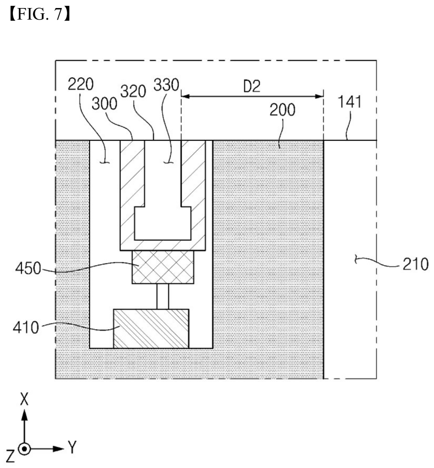

FIG. 7 is a cross-sectional view illustrating an example of operation of the second coating die 300 of the coating apparatus 10 according to exemplary embodiments of the present disclosure.

Referring to FIG. 7, the actuator 410 can move the second coating die 300 in the second direction (for example, Y direction) to adjust a relative position of the second coating die 300 with respect to the first coating die 100. By movement of the second coating die 300 in the second direction (for example, Y direction), a distance along the second direction (for example, Y direction) between the second outlet 320 of the second coating die 300 and the first outlet 141 of the first coating die 100 can be variable. The actuator 410 can move the second coating die 300 in the second direction (for example, Y direction) to adjust a second offset distance D2 in the second direction (for example, Y direction) between the second outlet 320 of the second coating die 300 and the first outlet 141 of the first coating die 100.

According to exemplary embodiments, the distance between the first outlet 141 of the first coating die 100 and the second outlet 320 of the second coating die 300, which is a factor for controlling thickness and/or width of an insulation layer applied on the base substrate 610, can be adjusted by moving the second coating die 300.

In a coating apparatus according to a comparative example, it would be required to provide a coating shim for discharging an insulation liquid separately from a coating shim for discharging an electrode slurry within a coating die. The coating shim for discharging the insulation liquid requires precision machining, which requires considerable manufacturing time and cost.

According to exemplary embodiments of the present disclosure, the second coating die 300 configured to discharge the insulation liquid is mounted on the first coating die 100 configured to discharge the electrode slurry, and since the coating shim 200 for discharging the insulation liquid that requires precision machining is not needed, manufacturing costs of the coating apparatus 10 can be reduced.

Meanwhile, dimensions of an insulation layer applied on the base substrate 610 (for example, width and thickness of the insulation layer) are factors affecting reliability of a secondary battery including an electrode manufactured through a coating process, such as suppression of lithium precipitation. As a control factor for controlling dimensions of the insulation layer in the coating process, there is a method of controlling an operating speed of a pump installed in an insulation liquid supply line (for example, controlling revolutions per minute (rpm) to adjust a discharge flow rate of the insulation liquid). However, it is difficult to control dimensions of the insulation layer to desired values only by controlling the operating speed of the pump, and it takes a lot of time to adjust conditions of the coating process.

According to exemplary embodiments of the present disclosure, since the second coating die 300 configured to discharge the insulation liquid is movably mounted on the first coating die 100 configured to discharge the electrode slurry, factors affecting dimensions of the insulation layer, such as a gap between an insulation liquid outlet and the coating roll 520 and a distance between the insulation liquid outlet and an electrode slurry outlet, can be adjusted. The operating speed of the pump and the position of the second coating die 300 can be utilized as control factors for controlling dimensions of the insulation layer, thereby enabling diversification of control methods for the coating process and reducing the loss of condition adjustment in the coating process.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A coating apparatus, comprising:
a first coating die comprising a first groove, a manifold accommodating a first coating liquid, and a first outlet discharging the first coating liquid;
a coating shim inserted into the first coating die and having a first flow path communicating with the manifold and a second groove communicating with the first groove; and
a second coating die disposed in the first groove of the first coating die and the second groove of the coating shim and comprising a second outlet discharging a second coating liquid.

2. The coating apparatus of claim 1, wherein the first coating liquid is an electrode slurry, and the second coating liquid is an insulation liquid.

3. The coating apparatus of claim 1, wherein the second coating die is configured to move within the first groove of the first coating die.

4. The coating apparatus of claim 1, wherein the second coating die is configured to move in a first direction parallel to a discharge direction of the first coating liquid within the first groove of the first coating die.

5. The coating apparatus of claim 4, wherein by movement of the second coating die in the first direction, a distance along the first direction between a first die lip of the first coating die where the first outlet of the first coating die is provided and a second die lip of the second coating die where the second outlet of the second coating die is provided is variable.

6. The coating apparatus of claim 1, wherein the second coating die is configured to move in a second direction crossing a discharge direction of the first coating liquid within the first groove of the first coating die.

7. The coating apparatus of claim 6, wherein by movement of the second coating die in the second direction, a distance along the second direction between the first outlet of the first coating die and the second outlet of the second coating die is variable.

8. The coating apparatus of claim 1, further comprising an actuator that moves the second coating die within the first groove of the first coating die.

9. The coating apparatus of claim 8, wherein the actuator is configured to move the second coating die in a first direction parallel to a discharge direction of the first coating liquid.

10. The coating apparatus of claim 8, wherein the actuator is configured to move the second coating die in a second direction crossing a discharge direction of the first coating liquid.

11. The coating apparatus of claim 1, wherein the coating shim separates the first flow path from the second groove.

12. The coating apparatus of claim 1, further comprising a piping disposed outside the first coating die and delivering the second coating liquid to the second coating die.

13. A coating apparatus, comprising:
a first coating die comprising a first groove and a first outlet discharging a first coating liquid;
a second coating die disposed within the first groove of the first coating die and comprising a second outlet discharging a second coating liquid; and
an actuator that moves the second coating die within the first groove of the first coating die.

14. The coating apparatus of claim 13, wherein the actuator is configured to move the second coating die in a first direction parallel to a discharge direction of the first coating liquid and in a second direction crossing the discharge direction of the first coating liquid.

15. The coating apparatus of claim 13, wherein the first coating liquid is an electrode slurry, and the second coating liquid is an insulation liquid.
